# EUROPEAN PATENT APPLICATION

(11) **EP 4 646 957 A1**
(43) Date of publication of application: **12.11.2025**
(21) Application number: 23918428.6
(22) Date of filing: 27.01.2023
(51) Int. Cl.: A24F 40/90

(54) **AEROSOL GENERATION SYSTEM**

(71) Applicant: Japan Tobacco Inc., Tokyo 105-6927 (JP)
(72) Inventor: ICHINOSE, Atsushi, Tokyo 130-8603 (JP)
(74) Representative: Hoffmann Eitle
(86) International application number: PCT/JP2023/002684
(87) International publication number: WO 2024/157468

(57) **Abstract**

PROBLEM: To provide a more suitable arrangement relating to battery replacement in an inhalation device.

SOLUTION: An aerosol generation system comprising: a housing; a first opening provided at one end of the housing in a first direction; an accommodating portion for accommodating a substrate which is inserted/withdrawn through the first opening; a load for generating energy for heating an aerosol source contained in the substrate accommodated in the accommodating portion; a plurality of electrical contacts detachably connected to each of a positive electrode and a negative electrode of a battery pack for supplying power to the load; and a control circuit for controlling power supply from the battery pack to the load, wherein, in a state in which the plurality of electrical contacts, and the positive electrode and the negative electrode of the battery pack are connected, the plurality of electrical contacts are positioned further to the first opening side than the battery pack in the first direction.

## Description

### TECHNICAL FIELD

The present disclosure relates to an aerosol generation system.

### BACKGROUND ART

Inhalation devices that generate substances to be inhaled by a user, such as e-cigarettes and nebulizers, are in widespread use. For example, an inhalation device employs an aerosol source for generating an aerosol, and a substrate including a flavor source or the like for imparting a flavor component to the generated aerosol, to generate an aerosol to which the flavor component has been imparted. The user can enjoy the flavor by inhaling the aerosol to which the flavor component has been imparted, generated by the inhalation device. The action by which the user inhales the aerosol is also referred to below as "puffing" or a "puffing action".

In recent years, it has been considered desirable to make the batteries of inhalation devices replaceable for the purposes of consumer protection and reduction of environmental burden. In this regard, PTL 1 below describes an inhalation device configured to enable a battery to be replaced by removing a detachable end cap.

### CITATION LIST

### PATENT LITERATURE

PTL 1: WO 2015/038981 A1

### SUMMARY OF INVENTION

### TECHNICAL PROBLEM

However, the technology disclosed in PTL 1 has only recently been developed, and there is still room for improvement in various aspects.

Accordingly, the present disclosure takes account of the abovementioned problem, and the objective of the present disclosure lies in providing a more suitable arrangement relating to battery replacement in an inhalation device.

### SOLUTION TO PROBLEM

In order to solve the problem above, one aspect of the present invention provides an aerosol generation system comprising: a housing; a first opening provided at one end of the housing in a first direction; an accommodating portion for accommodating a substrate which is inserted/withdrawn through the first opening; a load for generating energy for heating an aerosol source contained in the substrate accommodated in the accommodating portion; a plurality of electrical contacts detachably connected to each of a positive electrode and a negative electrode of a battery pack for supplying power to the load; and a control circuit for controlling power supply from the battery pack to the load, wherein, in a state in which the plurality of electrical contacts, and the positive electrode and the negative electrode of the battery pack are connected, the plurality of electrical contacts are positioned further to the first opening side than the battery pack in the first direction.

The plurality of electrical contacts may be provided at positions offset from the load in a second direction orthogonal to the first direction.

The electrical contacts may be formed by a heat-resistant alloy.

The battery pack may comprise a partition for isolating the positive electrode and the negative electrode.

The aerosol generation system may further comprise: a charging circuit for controlling charging of the battery pack; and a charging terminal, which is an interface between the charging circuit and an external power source for supplying power for charging the battery pack, and, in a state in which the plurality of electrical contacts, and the positive electrode and the negative electrode of the battery pack are connected, the charging circuit and the charging terminal may be positioned further to the first opening side than the battery pack in the first direction.

The charging terminal may be provided at a position offset from the load in a second direction orthogonal to the first direction.

The charging terminal may be provided at one end of the housing in the second direction.

The aerosol generation system may further comprise: a second opening provided at another end of the housing in the first direction; a battery compartment for accommodating the battery pack which is inserted/withdrawn through the second opening; and a cover portion for opening/closing the second opening.

The aerosol generation system may further comprise the substrate.

The aerosol generation system may further comprise the battery pack.

### ADVANTAGEOUS EFFECTS OF INVENTION

The present disclosure as described above provides a more suitable arrangement relating to battery replacement in an inhalation device.

### BRIEF DESCRIPTION OF DRAWINGS

Fig. 1 is a schematic diagram schematically showing a configuration example of an inhalation device.
Fig. 2 is an oblique view showing an example of the external configuration of an inhalation device according to an embodiment of the present disclosure.
Fig. 3 schematically shows the internal configuration of the inhalation device according to the embodiment.
Fig. 4 schematically shows the internal configuration of the inhalation device according to the embodiment.
Fig. 5 schematically shows the configuration of an inhalation device according to a first variant example.
Fig. 6 schematically shows the configuration of an inhalation device according to a second variant example.

### DESCRIPTION OF EMBODIMENTS

Preferred embodiments of the present disclosure will be described in detail below with reference to the appended drawings. It should be noted that components having substantially the same functional configuration will be assigned the same reference numbers in the description and drawings to avoid giving a duplicate description.

In this description and the drawings, elements having substantially the same functional configuration may also be distinguished by using the same code followed by an index comprising different alphabetic or numeric characters. For example, a plurality of elements having substantially the same functional configuration are distinguished, as necessary, as devices 1-1 and 1-2. However, if there is no need to specifically distinguish between each of the plurality of elements having substantially the same functional configuration, only the same reference numeral is assigned. For example, devices 1-1 and 1-2 are also referred to simply as device 1 when there is no need to distinguish between devices 1-1 and 1-2.

### 1. Basic configuration example

An inhalation device is a device for generating a substance to be inhaled by a user. Hereinafter, the substance generated by the inhalation device will be described as being an aerosol. Additionally, the substance generated by the inhalation device may be a gas.

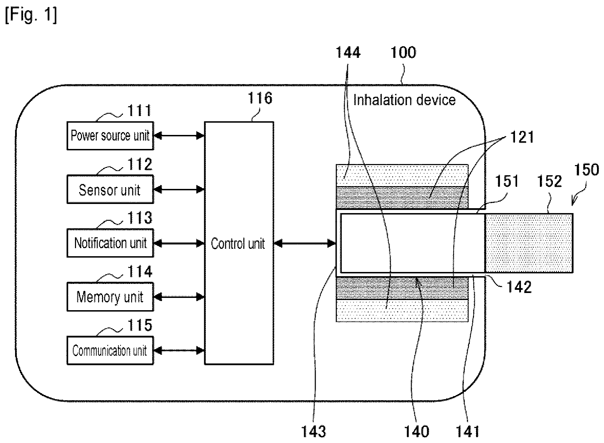

Fig. 1 is a schematic diagram schematically showing a configuration example of an inhalation device. As shown in fig. 1, an inhalation device 100 according to this configuration example comprises: a power source unit 111, a sensor unit 112, a notification unit 113, a memory unit 114, a communication unit 115, a control unit 116, a heating unit 121, an accommodating portion 140, and a heat insulating portion 144.

The power source unit 111 stores electrical power. The power source unit 111 then supplies the electrical power to each component of the inhalation device 100 in accordance with control performed by the control unit 116. The power source unit 111 may be configured by a rechargeable battery such as a lithium ion secondary battery, for example.

The sensor unit 112 acquires various types of information relating to the inhalation device 100. As an example, the sensor unit 112 is configured by a pressure sensor such as a capacitor microphone, a flow rate sensor or a temperature sensor, etc., and acquires values associated with inhalation by a user. As another example, the sensor unit 112 is configured by an input device, such as a button or switch, for accepting input of information from the user.

The notification unit 113 notifies the user of information. The notification unit 113 is configured by a light emitting device that emits light, a display device that displays images, a sound output device that outputs sound, or a vibrating device that vibrates, for example.

The memory unit 114 stores various types of information for the operation of the inhalation device 100. The memory unit 114 is configured by a non-volatile storage medium such as a flash memory, for example.

The communication unit 115 is a communication interface capable of performing communication in accordance with any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116 functions as an arithmetic processing device and a control device, and controls overall operation within the inhalation device 100 in accordance with various programs. The control unit 116 is realized by a CPU (central processing unit) or an electronic circuit such as a microprocessor, for example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source comprises a tobacco-derived or non-tobacco-derived flavor component. If the inhalation device 100 is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

The heating unit 121 heats the aerosol source to atomize the aerosol source, thereby generating the aerosol. In the example shown in fig. 1, the heating unit 121 has a film-like form and is arranged so as to cover the outer circumference of the accommodating portion 140. Then, when the heating unit 121 generates heat, the substrate portion 151 of the stick-type substrate 150 is heated from the outer circumference and an aerosol is generated. The heating unit 121 generates heat when supplied with electricity from the power source unit 111. By way of example, electricity may be supplied when the sensor unit 112 detects that the user has started inhaling and/or that predetermined information has been input. The supply of electricity may then be stopped when the sensor unit 112 detects that the user has finished inhaling and/or that predetermined information has been input.

The heat insulating portion 144 prevents heat transfer from the heating unit 121 to other components. For example, the heat insulating portion 144 is configured by a vacuum insulating material or an aerogel insulating material, etc.

A configuration example of the inhalation device 100 has been described above. The inhalation device 100 is, of course, not limited to the configuration described above, and may adopt various configurations, such as those illustrated below by way of example.

As one example, the heating unit 121 may have a blade-like form and may be arranged so as to protrude into the internal space 141 from the bottom portion 143 of the accommodating portion 140. In that case, the blade-like heating unit 121 is inserted into the substrate portion 151 of the stick-type substrate 150 and heats the substrate portion 151 of the stick-type substrate 150 from the inside. As another example, the heating unit 121 may be arranged so as to cover the bottom portion 143 of the accommodating portion 140. Furthermore, the heating unit 121 may be configured by a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 that has been inserted into the internal space 141. In that case, the heating unit 121 may be provided on the part of the accommodating portion 140 gripping the stick-type substrate 150, and may heat the stick-type substrate 150 while pressing same.

Furthermore, the means for atomizing the aerosol source is not limited to heating provided by the heating unit 121. For example, the means for atomizing the aerosol source may be induction heating. In that case, the inhalation device 100 comprises at least an electromagnetic induction source such as a coil for generating a magnetic field, instead of the heating unit 121. A susceptor which generates heat by means of induction heating may be provided in the inhalation device 100, or may be contained in the stick-type substrate 150.

### 2. Detailed configuration example

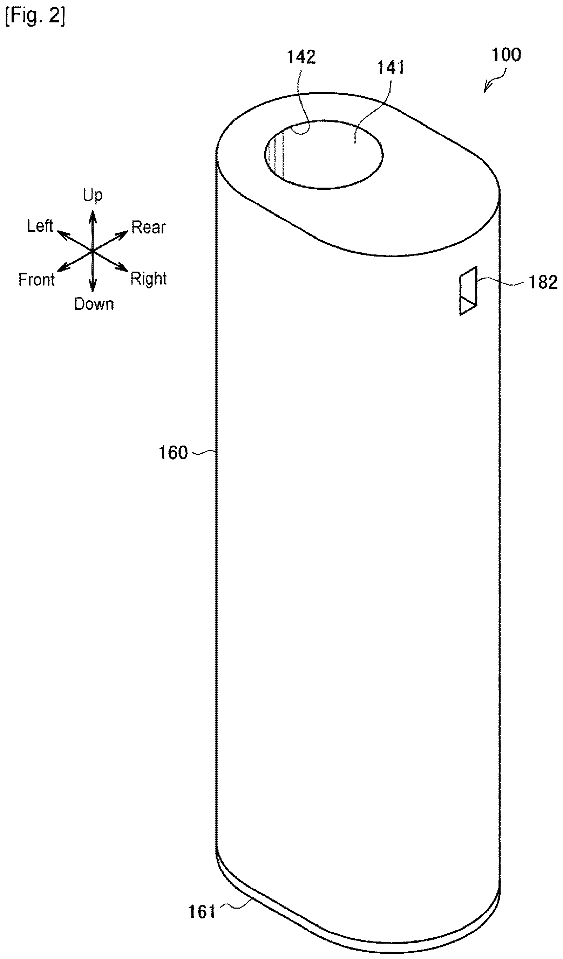

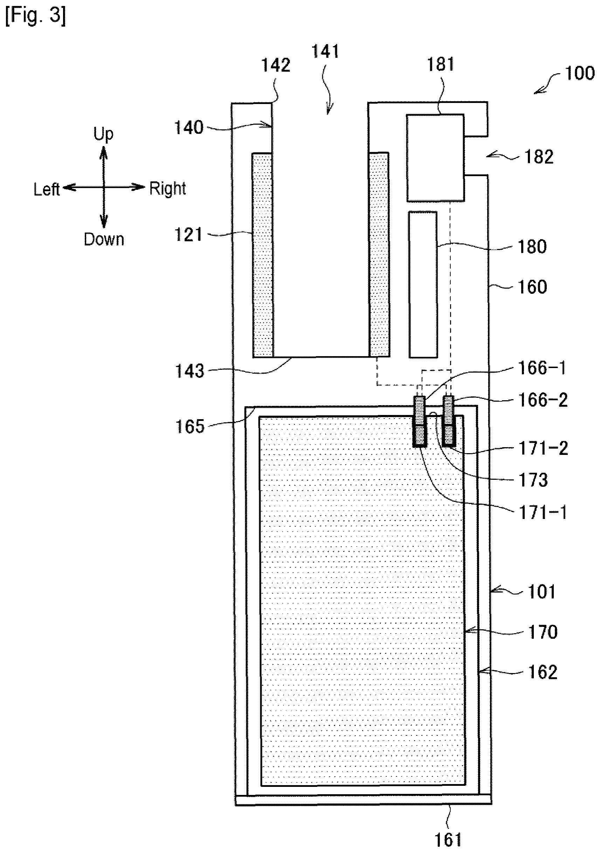

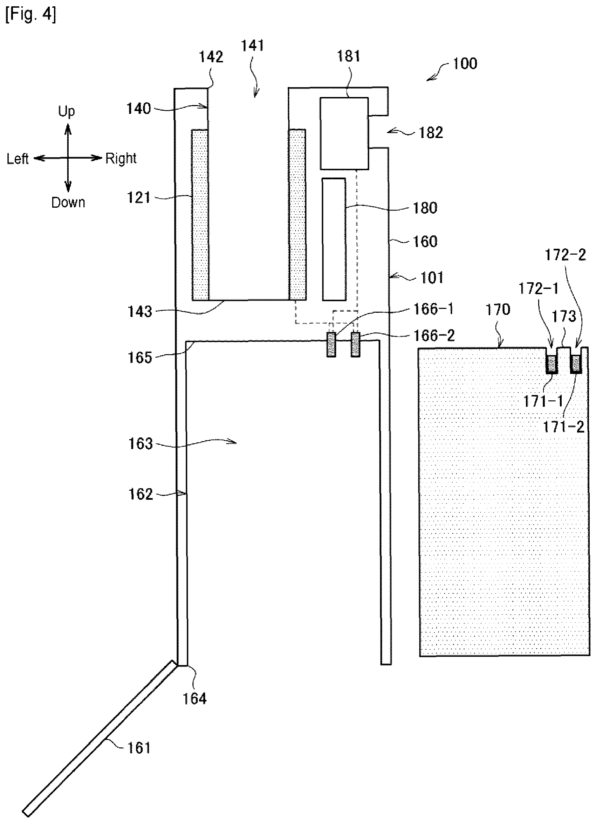

A detailed configuration example of the inhalation device 100 according to the embodiment will be described with reference to fig. 2-4. Fig. 2 is an oblique view showing an example of the external configuration of the inhalation device 100 according to the embodiment. Fig. 3 and 4 schematically show the internal configuration of the inhalation device 100 according to the embodiment.

As shown in fig. 2, the inhalation device 100 is configured as a straight columnar element having an oval-shaped cross section. The inhalation device 100 is sized so that it can be gripped by a user, and used while being gripped by the user. It should be noted that a user interface such as a button for inputting operating instructions to the inhalation device 100, or a display for displaying an operating state of the inhalation device 100 may be provided on the surface of the inhalation device 100, although this is not shown in fig. 2.

In this embodiment, a direction of insertion/withdrawal of the stick-type substrate 150 into/from the accommodating portion 140 will also be referred to below as the vertical direction. The vertical direction corresponds to a longitudinal direction of the inhalation device 100. Furthermore, a longitudinal direction in a cross section of the inhalation device 100 will also be referred to as a lateral direction, and a short-side direction in said cross section will also be referred to as a front-rear direction. The vertical direction is an example of a first direction. The lateral direction is an example of a second direction orthogonal to the vertical direction.

As shown in fig. 2-4, the inhalation device 100 comprises: a housing 160, a cover portion 161, a battery compartment 162, a plurality of electrical contacts 166 (166-1, 166-2), a control circuit 180, a charging circuit 181, and a charging terminal 182. A battery pack 170 is then removably fitted in the inhalation device 100. The control circuit 180 and the charging circuit 181 correspond to the control unit 116 shown in fig. 1. The battery pack 170 corresponds to the power source unit 111 shown in fig. 1.

The battery pack 170 is a rechargeable battery configured to be removable from the inhalation device 100. The battery pack 170 comprises a plurality of electrodes 171 (171-1 and 171-2). As an example, the electrode 171-1 is a positive electrode, and the electrode 171-2 is a negative electrode. A portion of the inhalation device 100 excluding the battery pack 170 will also be referred to as a main body 101.

The housing 160 constitutes the outermost casing of the inhalation device 100. As shown in fig. 2-4, the opening 142 is provided in a top face of the housing 160. The stick-type substrate 150 is inserted into and withdrawn from the accommodating portion 140 through the opening 142. The opening 142 is an example of a first opening provided at one end of the housing 160 in the vertical direction. Meanwhile, an opening 164 is provided in a bottom face of the housing 160, as shown in fig. 4. The opening 164 is an example of a second opening provided at another end of the housing 160 in the vertical direction.

The battery compartment 162 removably accommodates the battery pack 170. More specifically, the battery compartment 162 has an internal space 163, and the battery pack 170 is accommodated in the internal space 163. The opening 164 allows the internal space 163 to communicate with the outside. The battery pack 170 is then inserted into and withdrawn from the battery compartment 162 through the opening 164. The cover portion 161 opens/closes the opening 164. Opening/closing of the opening 164 by the cover portion 161 may be achieved by means of a hinge mechanism. Fig. 3 shows a state in which the cover portion 161 has closed the opening 164, and the battery pack 170 is accommodated in the battery compartment 162. Meanwhile, fig. 4 shows a state in which the cover portion 161 has opened the opening 164, and the battery pack 170 has been withdrawn from the battery compartment 162.

As shown in fig. 3 and 4, the main body 101 of the inhalation device 100 comprises a plurality of electrical contacts 166 (166-1 and 166-2). The electrical contacts 166 constitute a power interface between the battery pack 170 and components of the inhalation device 100 inside the main body 101. As shown in fig. 3 and 4, the electrical contacts 166 are connected by way of conducting wires to the heating unit 121 and the charging circuit 181, and power is sent/received therebetween. Fig. 3 and 4 do not show electrical connections with other components.

As shown in fig. 3 and 4, the plurality of electrical contacts 166 are respectively detachably connected to each of the plurality of electrodes 171 of the battery pack 170. The plurality of electrical contacts 166 are configured to protrude downward from an upper face 165 of the battery compartment 162. While the battery pack 170 is accommodated in the battery compartment 162, the plurality of electrical contacts 166 are respectively connected to each of the plurality of electrodes 171 (171-1 and 171-2) of the battery pack 170. For example, the electrical contact 166-1 is connected to the electrode 171-1, and the electrical contact 166-2 is connected to the electrode 171-2. This enables a supply of power from the battery pack 170 to the other components of the inhalation device 100 inside the main body 101. Meanwhile, when the battery pack 170 has been withdrawn from the battery compartment 162, this releases the connections between each of the plurality of electrical contacts 166 and each of the plurality of electrodes 171 of the battery pack 170.

The electrical contacts 166 may be configured by elastic elements such as a wire spring or a plate spring. The elastic elements serving as the electrical contacts 166 are pushed upward while contacting the electrodes 171 as the battery pack 170 is being inserted into the battery compartment 162, and demonstrate a downward elastic force. By virtue of this configuration, the electrical contacts 166 and the electrodes 171 can be placed in more secure contact while the battery pack 170 is accommodated in the battery compartment 162. As a result, it is possible to reduce contact resistance at the connections between the electrical contacts 166 and the electrodes 171.

The electrical contacts 166 are preferably formed by a heat-resistant alloy. Examples of heat-resistant alloys that may be cited include phosphor bronze and Corson alloys. By virtue of this configuration, it is possible to limit relaxation of the elastic force of the electrical contacts 166 associated with an increase in the temperature of the electrical contacts 166. This makes it possible to limit an increase in contact resistance at the connections between the electrical contacts 166 and the electrodes 171, even if the temperature of the electrical contacts 166 rises due to heat transfer from the heating unit 121.

As shown in fig. 3 and 4, the plurality of electrical contacts 166 are preferably provided at positions offset from the heating unit 121 in the lateral direction. An offset position as referred to here indicates a spaced-apart position or a non-overlapping position. By virtue of this configuration, it is possible to limit heat transfer from the heating unit 121 to the electrical contacts 166. As a result, it is possible to limit an increase in contact resistance at the connections between the electrical contacts 166 and the electrodes 171 associated with a temperature increase of the electrical contacts 166.

As shown in fig. 3, in a state in which the plurality of electrical contacts 166 and the plurality of electrodes 171 of the battery pack 170 are connected, the plurality of electrical contacts 166 are positioned further to the opening 142 side than the battery pack 170 in the vertical direction. That is to say, neither of the plurality of electrical contacts 166 is disposed below the battery pack 170 accommodated in the battery compartment 162, and both of the plurality of electrical contacts 166 are positioned only above. By virtue of this configuration, it is possible to minimize the distance between the electrical contacts 166 and the components to be supplied with power from the battery pack 170 (e.g., the heating unit 121 and the charging circuit 181). It is therefore possible to limit power loss while electricity is being delivered from the battery pack 170 to the destination of power supply. This configuration also has numerous advantages compared with when the electrical contacts 166 are provided both above and below the battery pack 170. Firstly, it is possible to prevent the electrical contacts 166 and the electrodes 171 from being connected with positive/negative in reverse, therefore making it easier to replace the battery pack 170. There is furthermore an esthetic advantage in that the electrical contacts 166 are not readily apparent even if the cover portion 161 is open. Considering also that gravity acts in a downward direction of the inhalation device 100 in the normal mode of use, it is possible to avoid exertion of the weight of the battery pack 170 on the connections between the electrical contacts 166 and the electrodes 171, therefore making it possible to limit wear of those connections.

As shown in fig. 3 and 4, the battery pack 170 has a partition 173 which isolates the electrode 171-1 and the electrode 171-2. Specifically, the plurality of electrodes 171 are provided so as to be implanted in a plurality of recesses 172 (172-1 and 172-2) provided in the top face of the battery pack 170. The partition 173 is then provided between the adjacent recesses 172. By virtue of this configuration, the plurality of electrical contacts 166 respectively fit completely into each of the plurality of recesses 172 and are isolated from each other by the partition 173 while the battery pack 170 is accommodated in the battery compartment 162. It is possible to prevent short-circuiting as a result.

It should be noted that the battery compartment 162 should be formed with a shape that circumscribes the battery pack 170. As an example, the battery pack 170 is preferably configured with a shape that is not easy to rotate about the vertical direction when accommodated in the battery compartment 162, such as an elliptical cylinder shape or a prism shape. By virtue of this configuration, rotation of the battery 170 inside the battery compartment 162 is restricted so that the connection between the electrical contacts 166 and the electrodes 171 can be easily maintained.

The control circuit 180 controls power supply from the battery pack 170 to the heating unit 121. In particular, the control circuit 180 may control power supply from the battery pack 170 to the heating unit 121 on the basis of a heating profile. The heating profile is control information for controlling the temperature at which the aerosol source is heated, and is information indicating a time-series transition of a target value of the temperature of the heating unit 121, for example. The control unit 180 controls power supply to the heating unit 121 so that the temperature of the heating unit 121 transitions to the target temperature in the manner defined in the heating profile. The heating profile is typically designed so that the flavor experienced by the user when inhaling the aerosol generated from the stick-type substrate 150 is optimized. Therefore, by controlling the operation of the heating unit 121 based on the heating profile, the flavor experienced by the user can be optimized.

The temperature control of the heating unit 121 can be realized by known feedback control, for example. The feedback control may be, for example, PID control (Proportional-Integral-Differential Controller). The control unit 116 may cause power from the battery pack 170 to be supplied to the heating unit 121 in the form of pulses by pulse width modulation (PWM) or pulse frequency modulation (PFM). In that case, the control unit 116 can control the temperature of the heating unit 121 by adjusting the duty ratio of the power pulses in the feedback control.

The temperature of the heating unit 121 can be quantified by measuring or estimating the electrical resistance value of the heating unit 121 (a heating resistive element constituting the heating unit 121, to be more precise), for example. This is because the electrical resistance value of the heating resistive element varies with temperature. The electrical resistance value of the heating resistive element can be estimated by measuring the amount of voltage drop at the heating resistive element, for example. The amount of voltage drop at the heating resistive element can be measured by a voltage sensor measuring a potential difference applied to the heating resistive element. In another example, the temperature of the heating unit 121 can be measured by a temperature sensor such as a thermistor installed near the heating unit 121.

The charging circuit 181 controls charging of the battery pack 170. The charging circuit 181 supplies the battery pack 170 with power supplied from an external power source via the charging terminal 182. Here, the charging circuit 181 controls the voltage and current. The charging circuit 181 may control charging of the battery pack 170 while detecting the temperature of the battery pack 170.

Moreover, the temperature of the battery pack 170 may be detected by means of a temperature sensor such as a thermistor. The thermistor for detecting the temperature of the battery pack 170 may be built into the battery pack 170. Alternatively, the thermistor for detecting the temperature of the battery pack 170 may be disposed at a position on the inner wall of the battery compartment 162 in contact with the battery pack 170 accommodated in the battery compartment 162.

The charging terminal 182 is an interface between the charging circuit 181 and the external power source for supplying power for charging the battery pack 170 accommodated in the battery compartment 162. As an example, the charging terminal 182 is a USB (universal serial bus) port. A USB cable is then connected to the charging terminal 182, and power is supplied to the charging terminal 182 from an outlet via the USB cable.

As shown in fig. 3 and 4, the charging terminal 182 is preferably provided at a position offset from the heating unit 121 in the lateral direction. By virtue of this configuration, it is possible to limit heat transfer from the heating unit 121 to the charging terminal 182. As a result, it is possible to prevent damage to the charging terminal 182 associated with a temperature increase of the charging terminal 182.

Specifically, as shown in fig. 3 and 4, the charging terminal 182 is preferably provided at one end of the housing 160 in the lateral direction. When the heating unit 121 is provided on the left-hand side in particular, the charging terminal 182 is preferably provided at the right-hand end, which is the end on the opposite side to the heating unit 121. By virtue of this configuration, it is possible to limit heat transfer from the heating unit 121 to the charging terminal 182 to the maximum extent.

As shown in fig. 3, in a state in which the plurality of electrical contacts 166 and the plurality of electrodes 171 of the battery pack 170 are connected, the charging circuit 181 and the charging terminal 182 are positioned further to the opening 142 side than the battery pack 170 in the vertical direction. That is to say, neither of the charging circuit 181 and the charging terminal 182 is disposed below the battery pack 170 accommodated in the battery compartment 162, and both of the charging circuit 181 and the charging terminal 182 are positioned only above. By virtue of this configuration, the charging terminal 182 can be arranged close to the charging circuit 181. It is therefore possible to limit power loss while electricity is being delivered from the charging terminal 182 to the charging circuit 181.

### 3. Supplementary information

Preferred embodiments of the present disclosure were described in detail above with reference to the appended drawings, but the present disclosure is not limited to those examples. It is obvious that a person having ordinary knowledge in the technical field to which the present disclosure belongs will be able to conceive of a number of variant examples or modified examples within the scope of the technical concept disclosed in the claims, and any such variant examples or modified examples are naturally understood to fall within the technical scope of the present disclosure.

### (1) Variant examples

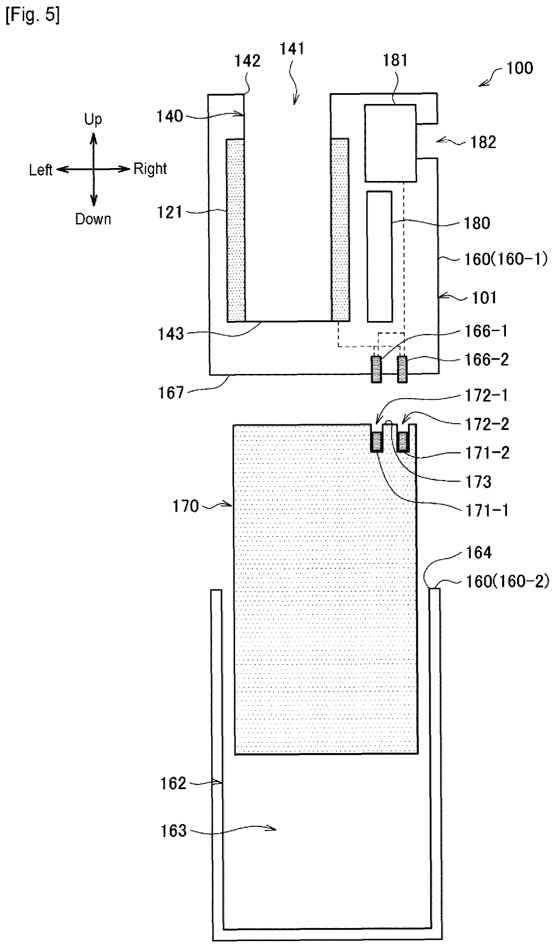

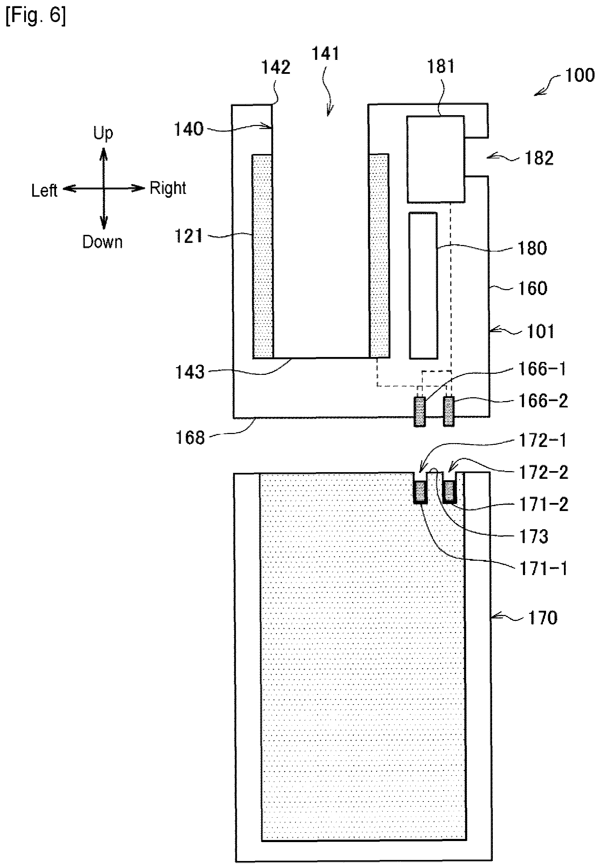

In the embodiments described above, the opening 164 was provided at the lower end of the inhalation device 100, and the opening 164 was opened/closed by means of the cover portion 161. The configuration enabling replacement of the battery pack 170 is not limited to such an example. As one example, the opening 164 and the cover portion 161 may be provided on a side face of the inhalation device 100, and the battery pack 170 may be inserted/withdrawn in the lateral direction or the front-rear direction. There are also a number of other possible configurations to enable replacement of the battery pack 170. Other configuration examples will be described with reference to fig. 5 and 6. The description below will focus on differences with the configuration example described in the embodiments above, and similarities will not be described.

Fig. 5 schematically shows the configuration of an inhalation device 100 according to a first variant example. In this variant example, the housing 160 may be formed by an upper housing 160-1 and a lower housing 160-2 which are detachable from each other, as shown in fig. 5. The connection between the upper housing 160-1 and the lower housing 160-2 may be achieved by means of mating or screwing, etc. The heating unit 121, the accommodating portion 140, the plurality of electrical contacts 166, the control circuit 180, the charging circuit 181, and the charging terminal 182 are provided in the upper housing 160-1. The main body 101 of this variant example is a part of the inhalation device 100 included in the upper housing 160-1. The plurality of electrical contacts 166 are each configured to protrude downward from a bottom face 167 of the upper housing 160-1. The lower housing 160-2 is configured as a bottomed cylindrical body comprising the battery compartment 162. The opening 164 allowing the internal space 163 of the battery compartment 162 to communicate with the outside is provided in an upper portion of the lower housing 160-2. As an example, the upper housing 160-1 and the battery pack 170 are connected in a state in which the plurality of electrical contacts 166 have each been respectively connected to the plurality of electrodes 171. After this, the upper housing 160-1 and the lower housing 160-2 are connected so that the battery pack 170 is accommodated in the battery compartment 162, thus constructing the inhalation device 100. Meanwhile, when the battery pack 170 is replaced, the lower housing 160-2 is detached from the upper housing 160-1 to expose the battery pack 170, after which the battery pack 170 is removed. According to this variant example, the battery pack 170 is replaced while the upper housing 160-1 and the lower housing 160-2 are in a state of separation. It is therefore possible to simplify the work of replacing the battery pack 170. This variant example further enables the weight of the battery pack 170 to be borne by the whole of the lower housing 160-2. Damage can therefore be prevented as compared with the embodiment above, in which the weight of the battery pack 170 is borne by the cover portion 161 alone.

Fig. 6 schematically shows the configuration of an inhalation device 100 according to a second variant example. As shown in fig. 6, the battery pack 170 is attached to or detached from the main body 101 while exposed, rather than being accommodated in this variant example. The heating unit 121, the accommodating portion 140, the plurality of electrical contacts 166, the control circuit 180, the charging circuit 181, and the charging terminal 182 are provided in the housing 160 according to this variant example. The main body 101 of this variant example is a part of the inhalation device 100 included in the housing 160. The connection between the housing 160 and the battery pack 170 may be achieved by means of mating or screwing, etc. The plurality of electrical contacts 166 are each configured to protrude downward from a bottom face 168 of the housing 160. The housing 160 and the battery pack 170 are then connected in a state in which the plurality of electrical contacts 166 have each been respectively connected to the plurality of electrodes 171, thus constructing the inhalation device 100. This variant example makes it possible to simplify the work of replacing the battery pack 170.

### (2) Other supplementary information

The inhalation device 100 is an example of an aerosol generation system which generates an aerosol by heating an aerosol source. As described above, the battery pack 170 is configured to be removable from the inhalation device 100. The inhalation device 100 excluding the battery 170 may be considered to be an aerosol generation system, and the whole of the inhalation device 100 including the battery pack 170 may also be considered to be an aerosol generation system. Furthermore, the combination of the inhalation device 100 and the stick-type substrate 150 may also be considered to be an aerosol generation system.

The heating unit 121 described above is an example of a load for generating energy for heating the aerosol source contained in the stick-type substrate 150 accommodated in the accommodating portion 140. When the inhalation device 100 heats the aerosol source by means of induction heating, the electromagnetic induction source such as an induction coil corresponds to the load.

An example in which the cover portion 161 is opened/closed by means of a hinge mechanism was described above, but the present disclosure is not limited to such an example. The cover portion 161 may equally be configured to be removable from the housing 160, and the cover portion 161 may also be detachably connected to the housing 160. The connection between the housing 160 and the cover portion 161 may be achieved by means of mating or screwing, etc.

An example in which the connection between the electrical contacts 166 and the electrodes 171 is achieved by configuring the electrical contacts 166 as elastic elements was described above, but the present disclosure is not limited to such an example. As an example, the electrodes 171 may be configured as elastic elements, instead of or as well as the electrical contacts 166. As another example, the electrical contacts 166 and/or the electrodes 171 may be configured as pogo pins.

An example in which the electrical contacts 166 are formed by a heat-resistant alloy was described above, but the present disclosure is not limited to such an example. The electrodes 171 may be formed by a heat-resistant alloy, instead of or as well as the electrical contacts 166.

An example in which the inhalation device 100 comprises the charging terminal 182 was described above, but the present disclosure is not limited to such an example. The inhalation device 100 may equally comprise a power-receiving device, such as a power-receiving coil, for receiving a contactless power supply. The power-receiving device is preferably disposed at the same position as the position of the charging terminal 182 described above.

An example in which the battery pack 170 is provided with the partition 173 for isolating the plurality of electrodes 171 was described above, but the present disclosure is not limited to such an example. For example, in the embodiments above, a partition for isolating the plurality of electrical contacts 166 may be provided on the upper face 165 of the battery compartment 162.

The inhalation device 100 may also have a function for detecting opening/closing of the cover portion 161. This function may be achieved by means of a capacitive sensor or a magnetic sensor, etc., for example. The control unit 116 may control operation of the inhalation device 100 based on opening/closing of the cover portion 161. As an example, the control unit 116 may implement operations of the inhalation device 100, such as heating by the heating unit 121, only in a state in which the cover portion 161 is closed. Contact between the electrodes 171 and the electrical contacts 166 may be incomplete when the cover portion 161 is in a half-mated state, that is, a state of incomplete closure. If the inhalation device 100 is operated with imperfect contact pressure, there is a risk of increased contact resistance causing the electrodes 171 and the electrical contacts 166 to generate heat. The present configuration makes it possible to suppress such a risk. Furthermore, when the cover portion 161 is fully open, the user can directly support the battery pack 170 with their fingers so that the battery pack 170 does not fall out. In that case, there would be a risk of the heat generated by the battery pack 170 burning the user's fingers. The present configuration makes it possible to ensure user safety.

It should be noted that the series of processes performed by each device described in the present description may be realized by using software, hardware, or any combination of software and hardware. Programs constituting the software are prestored on a recording medium (more specifically, a non-transitory computer-readable storage medium) provided internally or externally to each device, for example. When the programs are then executed, for example, by a computer for controlling each device described in the present description, the programs are read into a RAM and executed by means of a processing circuit such as a CPU. The recording medium is, for example, a magnetic disk, an optical disk, a magneto-optical disk, or a flash memory, etc. Furthermore, the computer programs may be distributed via a network, for example, without the use of a recording medium. Furthermore, the computer may be an application-specific integrated circuit such as ASIC, a general-purpose processor which executes functions by reading software programs, or a computer on a server used for cloud computing, etc. Furthermore, the series of processes performed by each device described in the present description may be processed in a distributed manner by multiple computers.

The following configurations also fall within the technical scope of the present disclosure.
(1) An aerosol generation system comprising: a housing;
   a first opening provided at one end of the housing in a first direction;
   an accommodating portion for accommodating a substrate which is inserted/withdrawn through the first opening;
   a load for generating energy for heating an aerosol source contained in the substrate accommodated in the accommodating portion;
   a plurality of electrical contacts detachably connected to each of a positive electrode and a negative electrode of a battery pack for supplying power to the load; and
   a control circuit for controlling power supply from the battery pack to the load,
   wherein
   in a state in which the plurality of electrical contacts, and the positive electrode and the negative electrode of the battery pack are connected, the plurality of electrical contacts are positioned further to the first opening side than the battery pack in the first direction.
(2) The aerosol generation system as disclosed in (1), wherein the plurality of electrical contacts are provided at positions offset from the load in a second direction orthogonal to the first direction.
(3) The aerosol generation system as disclosed in (1) or (2), wherein the electrical contacts are formed by a heat-resistant alloy.
(4) The aerosol generation system as disclosed in any one of (1) to (3), wherein the battery pack comprises a partition for isolating the positive electrode and the negative electrode.
(5) The aerosol generation system as disclosed in any one of (1) to (4), further comprising:
   a charging circuit for controlling charging of the battery pack; and
   a charging terminal, which is an interface between the charging circuit and an external power source for supplying power for charging the battery pack,
   wherein
   in a state in which the plurality of electrical contacts, and the positive electrode and the negative electrode of the battery pack are connected, the charging circuit and the charging terminal are positioned further to the first opening side than the battery pack in the first direction.
(6) The aerosol generation system as disclosed in (5), wherein the charging terminal is provided at a position offset from the load in a second direction orthogonal to the first direction.
(7) The aerosol generation system as disclosed in (6), wherein the charging terminal is provided at one end of the housing in the second direction.
(8) The aerosol generation system as disclosed in any one of (1) to (7), further comprising:
   a second opening provided at another end of the housing in the first direction;
   a battery compartment for accommodating the battery pack which is inserted/withdrawn through the second opening; and
   a cover portion for opening/closing the second opening.
(9) The aerosol generation system as disclosed in any one of (1) to (8), further comprising the substrate.
(10) The aerosol generation system as disclosed in any one of (1) to (9), further comprising the battery pack.

### REFERENCE SIGNS LIST

100 Inhalation device
101 Main body
111 Power source unit
112 Sensor unit
113 Notification unit
114 Memory unit
115 Communication unit
116 Control unit
121 Heating unit
140 Accommodating portion
141 Internal space
142 Opening
143 Bottom portion
150 Stick-type substrate
151 Substrate portion
152 Mouthpiece portion
160 Housing (160-1: upper housing, 160-2: lower housing)
161 Cover portion
162 Battery compartment
163 Internal space
164 Opening
165 Upper face
166 Electrical contact
167 Bottom face
168 Bottom face
170 Battery pack
171 Electrode
172 Recess
173 Partition
180 Control circuit
181 Charging circuit
182 Charging terminal

## Claims

1. An aerosol generation system comprising: a housing;
a first opening provided at one end of the housing in a first direction;
an accommodating portion for accommodating a substrate which is inserted/withdrawn through the first opening;
a load for generating energy for heating an aerosol source contained in the substrate accommodated in the accommodating portion;
a plurality of electrical contacts detachably connected to each of a positive electrode and a negative electrode of a battery pack for supplying power to the load; and
a control circuit for controlling power supply from the battery pack to the load,
wherein
in a state in which the plurality of electrical contacts, and the positive electrode and the negative electrode of the battery pack are connected, the plurality of electrical contacts are positioned further to the first opening side than the battery pack in the first direction.

2. The aerosol generation system as claimed in claim 1, wherein the plurality of electrical contacts are provided at positions offset from the load in a second direction orthogonal to the first direction.

3. The aerosol generation system as claimed in claim 1 or 2, wherein the electrical contacts are formed by a heat-resistant alloy.

4. The aerosol generation system as claimed in any one of claims 1 to 3, wherein the battery pack comprises a partition for isolating the positive electrode and the negative electrode.

5. The aerosol generation system as claimed in any one of claims 1 to 4, further comprising:
a charging circuit for controlling charging of the battery pack; and
a charging terminal, which is an interface between the charging circuit and an external power source for supplying power for charging the battery pack,
wherein
in a state in which the plurality of electrical contacts, and the positive electrode and the negative electrode of the battery pack are connected, the charging circuit and the charging terminal are positioned further to the first opening side than the battery pack in the first direction.

6. The aerosol generation system as claimed in claim 5, wherein the charging terminal is provided at a position offset from the load in a second direction orthogonal to the first direction.

7. The aerosol generation system as claimed in claim 6, wherein the charging terminal is provided at one end of the housing in the second direction.

8. The aerosol generation system as claimed in any one of claims 1 to 7, further comprising:
a second opening provided at another end of the housing in the first direction;
a battery compartment for accommodating the battery pack which is inserted/withdrawn through the second opening; and
a cover portion for opening/closing the second opening.

9. The aerosol generation system as claimed in any one of claims 1 to 8, further comprising the substrate.

10. The aerosol generation system as claimed in any one of claims 1 to 9, further comprising the battery pack.
